(19) Europäisches Patentamt
European Patent Office
Office européen des brevets

(11) **EP 4 597 418 A1**

(12) **EUROPEAN PATENT APPLICATION**
published in accordance with Art. 153(4) EPC

(43) Date of publication:
**06.08.2025 Bulletin 2025/32**

(21) Application number: **23869525.8**

(22) Date of filing: **30.03.2023**

(51) International Patent Classification (IPC):
***G06T 7/00*** (2017.01)

(52) Cooperative Patent Classification (CPC):
**G06T 7/00**

(86) International application number:
**PCT/CN2023/085277**

(87) International publication number:
**WO 2024/066269 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.09.2022 CN 202211204306**

(71) Applicant: **BYD Company Limited
Shenzhen, Guangdong 518118 (CN)**

(72) Inventors:
• **LI, Xinyu
Shenzhen, Guangdong 518118 (CN)**
• **CHEN, Chujun
Shenzhen, Guangdong 518118 (CN)**
• **XIA, Fanglin
Shenzhen, Guangdong 518118 (CN)**
• **LIU, Weihua
Shenzhen, Guangdong 518118 (CN)**

(74) Representative: **Mathys & Squire
The Shard
32 London Bridge Street
London SE1 9SG (GB)**

(54) **TURNOUT STATE DETECTION METHOD, STORAGE MEDIUM, AND CONTROLLER**

(57) A turnout state detection method. The method comprises: acquiring measured point cloud data in the driving direction of a first train on the basis of a sensor of the first train; from a pre-established point cloud semantic map, determining target point cloud data matched with the measured point cloud data, wherein the point cloud semantic map comprises point cloud data of various states of turnouts on the whole running line of the first train and turnout state information corresponding to the point cloud data; and determining a turnout state in the driving direction of the first train according to the turnout state information corresponding to the target point cloud data in the point cloud semantic map.

Obtain measured point cloud data in a driving direction of a first train based on a sensor of the first train — S110

Determine target point cloud data matched with the measured point cloud data from a pre-established point cloud semantic map, the point cloud semantic map including point cloud data of various states of turnouts on a whole running line of the first train and turnout state information corresponding to the point cloud data — S120

Determine a turnout state in the driving direction of the first train according to the turnout state information corresponding to the target point cloud data in the point cloud semantic map — S130

FIG. 5

## Description

## CROSS-REFERENCE TO RELATED APPLICATIONS

The present disclosure claims priority to and benefits of Chinese Patent Application No. 202211204306.X, filed on September 29, 2022 and entitled "TURNOUT STATE DETECTION METHOD, STORAGE MEDIUM, AND CONTROLLER". The entire content of the above-referenced application is incorporated herein by reference.

## FIELD

The present disclosure relates to the technical field of rail transit, and in particular to a turnout state detection method, a storage medium, and a controller.

## BACKGROUND

Detection of turnout opening directions is crucial to driving safety of trains. In methods for detecting a turnout opening direction, a ground subsystem is usually required to obtain status information of a ground in the related art. However, once the ground subsystem fails, it will be unable to complete the detection of the turnout opening direction.

## SUMMARY

An objective of this disclosure is to provide a turnout state detection method, a storage medium, and a controller, to resolve the above technical problems.

To achieve the foregoing objective, according to a first aspect, the present disclosure provides a turnout state detection method, including:

Measured point cloud data in a driving direction of a first train is obtained based on a sensor of the first train.

Target point cloud data matched with the measured point cloud data is determined from a pre-established point cloud semantic map. The point cloud semantic map includes point cloud data of various states of turnouts on a whole running line of the first train and turnout state information corresponding to the point cloud data.

A turnout state in the driving direction of the first train is determined according to the turnout state information corresponding to the target point cloud data in the point cloud semantic map.

Optionally, establishment of the point cloud semantic map includes:

The point cloud data of the various states of the turnouts on the whole running line is obtained.

The point cloud data is converted into two-dimensional data, and geometric features of the turnouts are determined according to the two-dimensional data.

Opening direction states and turnout types of the turnouts are determined according to the geometric features, and correspondences among the geometric features, the opening direction states, and the turnout types are established to obtain the point cloud semantic map.

Optionally, before the measured point cloud data in the driving direction of a first train is obtained based on the sensor of the first train, the method further includes:

The point cloud semantic map established by a second train is obtained.

The point cloud semantic map is established by the second train by performing the following steps: The point cloud data of the various states of the turnouts on the whole running line is obtained. The point cloud data is converted into two-dimensional data, and geometric features of the turnouts are determined according to the two-dimensional data. Opening direction states and turnout types of the turnouts are determined according to the geometric features. Correspondences among the geometric features, the opening direction states, and the turnout types are established to obtain the point cloud semantic map.

Optionally, the obtaining the point cloud data of the various states of the turnouts on the whole running line includes:

Point cloud data acquired by a sensor of the second train each time when the second train performs a plurality of runs on the whole running line is obtained. Opening direction states of the turnouts on the whole running line corresponding to each run in the plurality of runs are different. A number of the plurality of runs is a product of numbers of opening direction states of each turnout on the whole running line.

For the point cloud data of the whole running line acquired each time, turnout point cloud data on the whole running line is extracted and segmented from the point cloud data of the whole running line.

For each piece of turnout point cloud data, an absolute position of the turnout point cloud data is determined according to a relative position of the turnout point cloud data relative to the sensor of the second train and an absolute position of the second train at an acquisition moment of the turnout point cloud data.

Turnout point cloud data with a same absolute position is used as point cloud data of various states of a same turnout.

Optionally, the converting the point cloud data into two-dimensional data includes:

A collinear point cloud set is determined from the point cloud data. The collinear point cloud set includes point cloud data that are adjacent and have an angle between normal vectors being less than a preset threshold.

The point cloud data is projected onto a horizontal plane to obtain multiple data points on the horizontal plane.

Data points formed by each piece of point cloud data in the collinear point cloud set on the horizontal plane are connected to obtain the two-dimensional data.

Optionally, the geometric features include a number of angles of intersection formed by turnouts presented in the two-dimensional data and position relationships between the angles of intersection.

The turnout types include at least one of a simple turnout, a two-way turnout, a three-way turnout, and a multi-way turnout.

The opening direction states of the turnouts include a normal position and a reverse position.

Optionally, the obtaining measured point cloud data in a driving direction of a first train based on a sensor of the first train includes:

Point cloud data acquired by the sensor of the first train is obtained.

At least one of the following preprocessing is performed on the point cloud data: eliminating outlier data in the point cloud data, and downsampling the point cloud data.

It is determined whether point cloud data meeting a turnout feature exists in the preprocessed point cloud data.

In a case that point cloud data meeting the turnout feature exists, the point cloud data meeting the turnout feature is extracted and segmented from the preprocessed point cloud data to obtain the measured point cloud data.

Optionally, the point cloud semantic map further includes an absolute position of point cloud data, and the determining the target point cloud data matched with the measured point cloud data from the pre-established point cloud semantic map includes:

An absolute position of the first train at an acquisition moment of the measured point cloud data and a relative position of the measured point cloud data relative to the sensor of the first train are determined.

An absolute position of the measured point cloud data is determined according to the absolute position and the relative position.

Target point cloud data with an absolute position consistent with the absolute position of the measured point cloud data is determined from the point cloud semantic map.

According to a second aspect, the present disclosure provides a non-transitory computer-readable storage medium, having a computer program stored thereon. The program, when executed by a processor, implements the steps of the method in the first aspect.

According to a third aspect, the present disclosure provides a controller, including:

> a memory, having a computer program stored thereon; and
> a processor, configured to execute the computer program in the memory to implement the steps of the method in the first aspect.

In the foregoing technical solutions, a pre-constructed point cloud semantic map is used as a basis, measured point cloud data in a driving direction of a train is obtained by using a sensor of the train, target point cloud data is determined from the point cloud semantic map based on the measured point cloud data, and turnout state information corresponding to the target point cloud data is directly used as a detection result of a turnout state of the train. Because the train can obtain the measured point cloud data based on the sensor (for example, lidar) thereof, the solution can implement autonomous detection of a turnout state by the train without relying on a ground subsystem, offering greater universality, and reducing signal overhead between the train and a trackside subsystem.

Other features and advantages of the present disclosure will be described in detail in the following detailed description.

BRIEF DESCRIPTION OF THE DRAWINGS

The accompanying drawings are provided to further understand the present disclosure, and they constitute a part of the specification. The accompanying drawings, along with the specific implementations, are used to explain the present disclosure, and pose no limitation on the present disclosure. In the figures:

> FIG. 1 is a schematic diagram of a simple turnout according to an exemplary embodiment;
> FIG. 2 is a schematic diagram of a two-way turnout according to an exemplary embodiment;
> FIG. 3 is a schematic diagram of a three-way turnout according to an exemplary embodiment;
> FIG. 4 is a schematic diagram of a multi-way turnout according to an exemplary embodiment;
> FIG. 5 is a flowchart of a turnout state detection method according to an exemplary embodiment;
> FIG. 6 is a flowchart of establishing a point cloud semantic map in an exemplary embodiment;
> FIG. 7 is a flowchart of a specific implementation of S210 in an exemplary embodiment;
> FIG. 8 is a flowchart of a specific implementation of S220 in an exemplary embodiment;
> FIG. 9 is a flowchart of a specific implementation of S110 in an exemplary embodiment;
> FIG. 10 is a flowchart of a specific implementation of S120 in an exemplary embodiment; and
> FIG. 11 is a block diagram of a controller according to an exemplary embodiment.

**DETAILED DESCRIPTION**

The following describes the specific implementations of the present disclosure in detail with reference to the accompanying drawings. It should be understood that the specific implementations described herein are merely used to describe and explain the present disclosure, but are not intended to limit the present disclosure.

To enable a person skilled in the art to quickly understand the technical solutions provided in the embodiments of the present disclosure, the following first describes definitions of technical terms in the embodiments of the present disclosure.

First, the technical solutions provided in the embodiments of the present disclosure involve detecting a turnout state, which may be, but is not limited to, detecting a turnout type and/or detecting an opening direction state of a turnout.

Two opening direction states of a turnout may include a normal position and a reverse position. Specifically, the normal position and the reverse position are relative to a driving route of a train. The normal position of the turnout is a position at which the turnout is often opened, and the reverse position is a position temporarily changed during arrangement of a route. An opening direction of the turnout needs to be adjusted according to an arrangement status of a route, so that the train can travel along an arranged route.

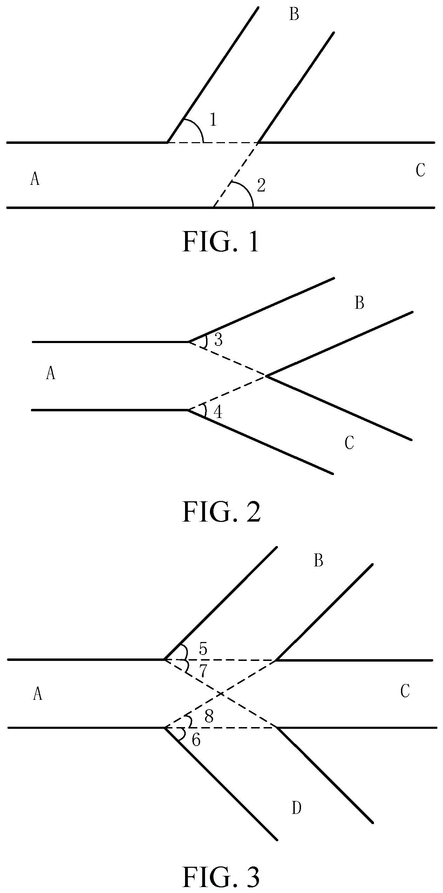

Four turnout types, i.e., a simple turnout, a two-way turnout, a three-way turnout, and a multi-way turnout may be included. For example, for a simple turnout shown in FIG. 1, a geometric feature of the simple turnout may include: all opening directions of the turnout have features of a total of two angles, and vertices of the two angles do not overlap. Forming an angle 1 represents that the turnout is in a normal position and a running direction of a train is from a track A to a track C, and forming an angle 2 represents that the turnout is in a reverse position and the running direction of the train is from the track A to a track B.

For another example, for a two-way turnout shown in FIG. 2, a geometric feature of the two-way turnout may include: all opening directions of the turnout have features of a total of two angles, and vertices of the two angles do not overlap, but angular bisectors of the two angles are collinear with two tracks. Forming an angle 3 represents that the turnout is in a normal position and a running direction of a train is from a track A to a track C, and forming an angle 4 represents that the turnout is in a reverse position and the running direction of the train is from the track A to a track B.

For another example, for a three-way turnout shown in FIG. 3, a geometric feature of the three-way turnout may include: all opening directions of the turnout have features of a total of four angles, and two sets of angles with a common vertex are axially symmetric with respect to a collinear side. Forming an angle 5 and an angle 6 represents that the turnout is in a normal position and a running direction of a train is from a track A to a track C, forming an angle 7 represents that the turnout is in a reverse position and the running direction of the train is from the track A to a track D, and forming an angle 8 represents that the turnout is in a reverse position and the running direction of the train is from the track A to a track B.

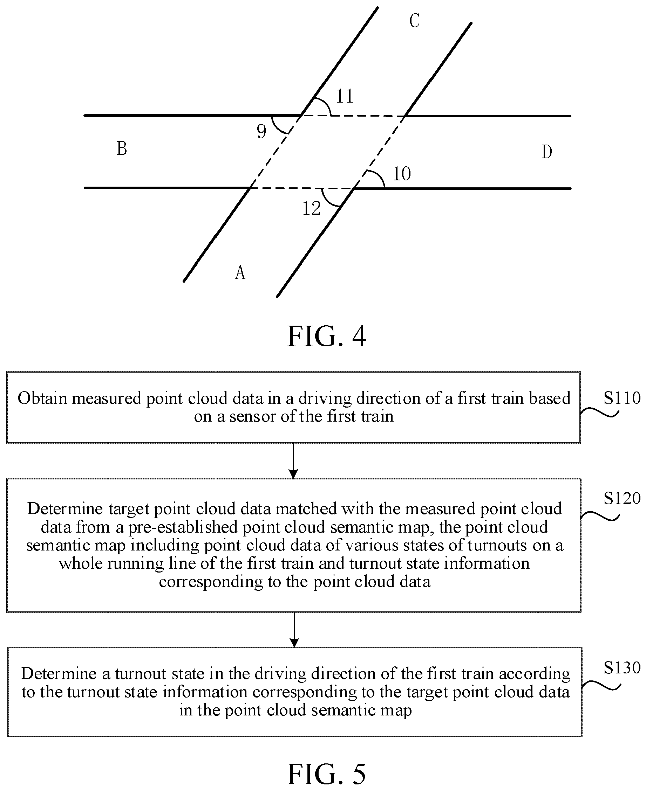

For another example, for a multi-way turnout shown in FIG. 4, a geometric feature of the multi-way turnout may include: all opening directions of the turnout have features of a total of four angles, and two sets of angles with a common vertex are symmetric with respect to a center. Forming an angle 9 and an angle 10 represents that the turnout is in a normal position and a running direction of a train is from a track A to a track C, and forming an angle 11 and an angle 12 represents that the turnout is in a reverse position and the running direction of the train is from a track B to a track D.

According to the technical solutions provided in the embodiments of the present disclosure, a number of angles of intersection of a turnout on a two-dimensional plane and position relationships between the angles of intersection may be used as a geometric feature of the turnout, and a point cloud semantic map including a correspondence between the geometric feature of the turnout and a turnout type is established by using the geometric feature of the turnout, to detect a state of the turnout during actual traveling of a train according to the pre-established point cloud semantic map. In addition, semantic information in the point cloud semantic map may be encoded into information identifiable by a train signal system, and may be, but is not limited to, a character string or a digital code.

Specifically, FIG. 5 is a flowchart of a turnout state detection method according to an exemplary embodiment. Referring to FIG. 1, the process includes the following steps.

S110: Measured point cloud data in a driving direction of a first train is obtained based on a sensor of the first train.

The measured point cloud data represents point cloud data monitored in real time before the first train passes through a turnout. The point cloud data may include coordinates of data points formed by objects sensed by the sensor of the first train.

For example, the objects sensed by the sensor of the first train include a track area scanned at a corresponding moment, stationary objects outside the track area, and mobile objects outside the track area.

S120: Target point cloud data matched with the measured point cloud data is determined from a pre-established point cloud semantic map. The point cloud semantic map includes point cloud data of various states of turnouts on a whole running line of the first train and turnout state information corresponding to the point cloud data.

The target point cloud data represents point cloud data corresponding to the measured point cloud data in the point cloud semantic map, for example, point cloud data having the same absolute position coordinates and geometric features as the measured point cloud data in the point cloud semantic map.

S130: A turnout state in the driving direction of the first train is determined according to the turnout state information corresponding to the target point cloud data in the point cloud semantic map.

In a possible implementation, the turnout state includes a turnout type and an opening direction state of the turnout. For the definitions of the turnout type and the opening direction state of the turnout, for details, refer to the foregoing descriptions of FIG. 1 to FIG. 4, and details are not described herein again.

For example, the multi-way turnout shown in FIG. 4 is used as an example. It is assumed that the train is on the track A and the traveling direction of the train is from the track A to the track C. Measured point cloud data of the track C and the track D in front of the track A is obtained, and through the point cloud semantic map, the obtained measured point cloud data of the track C and the track D is matched against the point cloud data in the point cloud semantic map to find corresponding point cloud data. It can be learned that the turnout type is a multi-way turnout, and geometric feature angles formed between the track A and the track C are the angle 9 and the angle 10. Based on the feature and the traveling direction of the train, it can be learned that the turnout is currently in the normal position.

It should be noted that the sensor mounted on the train includes one or more of lidar, a global navigation satellite system (GNSS), and an inertial measurement unit (IMU). The lidar may be of any one of a solid state, a semi-solid state, or a mechanical type.

During specific implementation, before step S110, the method further includes:
obtaining the point cloud semantic map established by a second train, where the point cloud semantic map is established by the second train by performing the following steps: obtaining the point cloud data of the various states of the turnouts on the whole running line; converting the point cloud data into two-dimensional data, and determining geometric features of the turnouts according to the two-dimensional data; and determining opening direction states and turnout types of the turnouts according to the geometric features, and establishing correspondences among the geometric features, the opening direction states, and the turnout types to obtain the point cloud semantic map.

As can be learned from the foregoing process, a pre-constructed point cloud semantic map is used as a basis, measured point cloud data in a driving direction of a train is obtained by using a sensor of the train, target point cloud data is determined from the point cloud semantic map based on the measured point cloud data, and turnout state information corresponding to the target point cloud data is directly used as a detection result of a turnout state of the train. Because the train can obtain the measured point cloud data based on the sensor thereof, the solution can implement autonomous detection of a turnout state by the train without relying on a ground subsystem, offering greater universality, and reducing signal overheads between the train and a trackside subsystem.

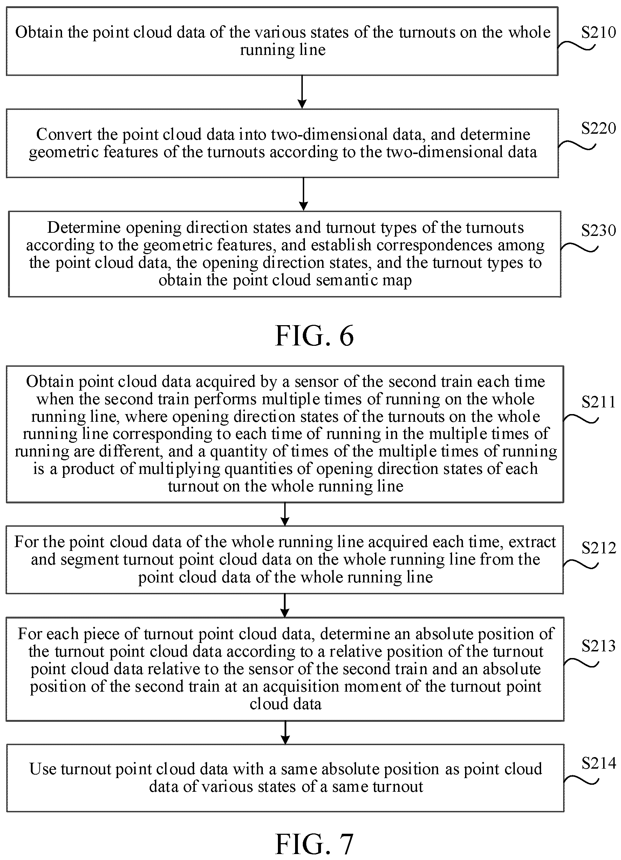

FIG. 6 is a flowchart of establishing a point cloud semantic map in an exemplary embodiment. Referring to FIG. 6, the process includes the following steps.

S210: The point cloud data of the various states of the turnouts on the whole running line is obtained.

The point cloud data of the various states of the turnouts may be obtained by using original point cloud data acquired by a sensor of a train. For example, at least one of the following preprocessing is performed on the original point cloud data: eliminating outlier data in the point cloud data, and downsampling the point cloud data. In a case of ensuring point cloud features, outlier points are removed by using statistical filtering or radius filtering. The downsampling may be performed by using voxel grid filtering or sampling consistency filtering, to reduce a data volume and improve the real-time running efficiency of the system. Further, it is determined whether point cloud data meeting a turnout feature exists in the preprocessed point cloud data. In a case that point cloud data meeting the turnout feature exists, the point cloud data meeting the turnout feature is extracted from the preprocessed point cloud data to obtain the measured point cloud data, so that the point cloud data representing the various states of the turnouts can be obtained.

In addition, to obtain all possible opening direction states of the turnouts, point cloud data may be acquired multiple times. During each acquisition, an opening direction state of the turnout is different. Point cloud data of different opening directions of the turnouts acquired each time is stored in a point cloud data set of the turnouts to enhance the completeness and richness of the point cloud data set of the turnouts. In addition, because point cloud data is acquired for turnout areas of the same line multiple times, interference caused to the acquisition of point cloud data by mobile objects or weather can be reduced, and subsequent processing based on the point cloud data set can also enhance the robustness of the system.

S220: The point cloud data is converted into two-dimensional data, and geometric features of the turnouts are determined according to the two-dimensional data.

S230: Opening direction states and turnout types of the turnouts are determined according to the geometric features, and correspondences among the geometric features, the opening direction states, and the turnout types are established to obtain the point cloud semantic map.

The correspondences among the geometric features, the opening direction states, and the turnout types in the point cloud semantic map may include, for example, a correspondence between a geometric feature and an opening direction state and a correspondence between a geometric feature and a turnout type. The opening direction state in the correspondence between a geometric feature and an opening direction state may be, for example, information about a driving direction of a train allowed by a turnout with the geometric feature. In this way, step S130 may be specifically determining a turnout state from a correspondence between a geometric feature of the target point cloud data and an opening direction state. If the allowed driving direction of a train represented by the opening direction state is not consistent with a driving direction of a train when the turnout is normally open, it is determined that the turnout state is in a reverse position. If the allowed driving direction of a train represented by the opening direction state is consistent with the driving direction of a train when the turnout is normally open, it is determined that the turnout state is in a normal position.

For example, a multi-way turnout is used as an example. Turnout point cloud data of all opening direction cases of the turnout is obtained, and the turnout point cloud data is converted into two-dimensional data to obtain a geometric feature of the turnout. The geometric feature of the turnout includes a number of angular features and geometric relationships between the angular features. As shown in FIG. 4, the angles 9 and 10 and the angles 11 and 12 respectively represent geometric features of point cloud of the turnout area when the turnout is in different opening directions. Various opening directions have features of a total of four angles, and two sets of angles have a common vertex. Each set of angles are symmetric with respect to the common vertex. Based on the foregoing geometric features, a point cloud semantic map of a correspondence between a geometric feature and an opening direction state and a correspondence between a geometric feature and a turnout type may be constructed.

It should be noted that the point cloud semantic map may be established according to the point cloud data of the various states of the turnouts on the whole running line obtained by the first train, or may be established according to the point cloud data of the various states of the turnouts on the whole running line obtained by another train. This is not limited in the present disclosure.

It can be learned from the foregoing process that, in the technical solutions provided in the embodiments of the present disclosure, after point cloud data of all opening direction states of turnouts on a whole running line of a train is obtained, the turnout point cloud data can be converted into two-dimensional data, so that accurate geometric features of the turnouts on a horizontal plane can be obtained. A correspondence between a geometric feature and an opening direction state and a correspondence between a geometric feature and a turnout type can be established according to the obtained geometric features, so that point cloud data acquired by the train in real time can be accurately matched with a pre-constructed point cloud semantic map, thereby accurately identifying an opening direction state and a turnout type of a turnout.

FIG. 7 is a flowchart of a specific implementation of S210 in an exemplary embodiment. Referring to FIG. 7, the process includes the following steps.

S211: Point cloud data acquired by a sensor of the second train each time when the second train performs a plurality of runs on the whole running line is obtained. Opening direction states of the turnouts on the whole running line corresponding to each run in the plurality of runs are different. A number of the plurality of runs is a product of numbers of opening direction states of each turnout on the whole running line.

The second train may be any train other than the first train. The point cloud data of the whole running line includes point cloud data of a track area, point cloud data of stationary objects outside the track area, and point cloud data of mobile objects outside the track area.

S212: For the point cloud data of the whole running line acquired each time, turnout point cloud data on the whole running line is extracted and segmented from the point cloud data of the whole running line.

The segmenting turnout point cloud data may be, for example, segmenting the point cloud data of the track area from the point cloud data of the whole running line of the train, and then segmenting the turnout point cloud data from the point cloud data of the track area.

The segmenting the point cloud data of the track area may filter out a point cloud that is not related to detection of a turnout opening direction, to reduce a data volume of further point cloud data processing, thereby improving processor efficiency. The segmenting the point cloud data of the track area is mainly extracting and segmenting a feature of a track, and the feature of the track is mainly a geometric feature of the track. A segmentation method of point cloud data may be, but not limited to, any one of a linear model method, a hyperbola model method, and a multi-feature fusion method.

S213: For each piece of turnout point cloud data, an absolute position of the turnout point cloud data is determined according to a relative position of the turnout point cloud data relative to the sensor of the second train and an absolute position of the second train at an acquisition moment of the turnout point cloud data.

Specifically, the relative position $L_i$ of the turnout point cloud data relative to the sensor of the second train is acquired by using lidar in the sensor of the second train, and is denoted as:

$$L_i(x_i, y_i, z_i),$$

where i = 1, 2, ..., N, and i represents a number of points included in a point cloud in a current frame.

The absolute position W of the second train at the acquisition moment of the turnout point cloud data is acquired by a GNSS in the sensor of the second train, and is denoted as:

$$W(x, y, z),$$

The absolute position of the second train at the acquisition moment of the turnout point cloud data may be, but is not limited to, absolute position information in an earth-centered, earth-fixed coordinate system.

In addition, the method further includes obtaining attitude information P of the second train at the acquisition moment of the turnout point cloud data, which is acquired by using an IMU in the sensor of the second train, and is denoted as:

$$P(roll, pitch, yaw),$$

where *roll* represents a roll angle of rotation around a Y axis, *pitch* represents a pitch angle of rotation around an X axis, and *yaw* represents a yaw angle of rotation around a Z axis.

A calculation formula of determining the absolute position of the turnout point cloud data according to the relative position of the turnout point cloud data relative to the sensor of the second train, the absolute position of the second train at the acquisition moment of the turnout point cloud data, and the attitude information of the second train at the acquisition moment of the turnout point cloud data is:

$$L'_i = \psi(L_i, W, P),$$

where $L'_i$ represents the absolute position of the turnout point cloud data, $\psi$ represents coordinate transformation, $L_i$ represents the relative position of the turnout point cloud data relative to the sensor of the second train, $W$ represents the absolute position of the second train at the acquisition moment of the turnout point cloud data, and $P$ represents the attitude information of the second train at the acquisition moment of the turnout point cloud data.

S214: Turnout point cloud data with a same absolute position is used as point cloud data of various states of a same turnout.

Turnout point cloud data with the same absolute position $L'_i$ is determined as a normal position or a reverse position of a turnout. For example, for the multi-way turnout shown in FIG. 4, absolute positions $L'_i$ of turnouts from the track A to the track C and from the track A to the track D are the same, a turnout position with the turnout opening direction being from the track A to the track C is set as the normal position, and a turnout position with the turnout opening direction being from the track A to the track D is set as the reverse position.

It can be learned from the foregoing process that, in the technical solutions provided in the embodiments of the present disclosure, point cloud data of various opening direction states of turnouts of a train on a whole running line corresponding to each run is obtained, then turnout point cloud data is then segmented, then an absolute position of a turnout point cloud is calculated according to a relative position of the obtained turnout point cloud data relative to a sensor, an absolute position of the train at an acquisition moment of the turnout point cloud data, and attitude information of the train at the acquisition moment of the turnout point cloud data, and point cloud data of various states of the turnouts is determined according to point cloud data with the same absolute position. Through the solution, a turnout area is precisely located, and various states of turnouts are located precisely.

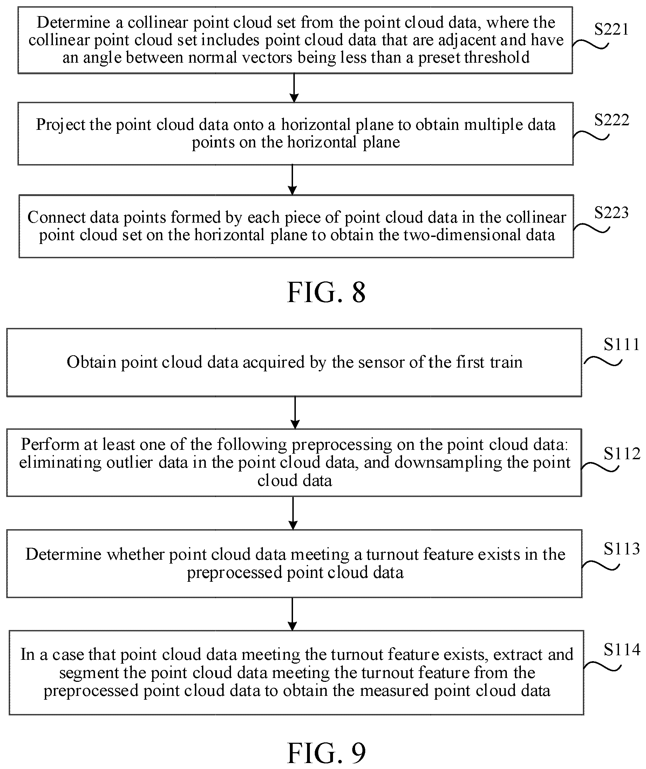

FIG. 8 is a flowchart of a specific implementation of S220 in an exemplary embodiment. Referring to FIG. 8, the process includes the following steps.

S221: A collinear point cloud set is determined from the point cloud data. The collinear point cloud set includes point cloud data that are adjacent and have an angle between normal vectors being less than a preset threshold.

Neighborhood points with normal vectors being equal or approximately equal of a point cloud point may be considered to be on a same plane. Therefore, point cloud data whose angle between normal vectors of point cloud data is less than a preset threshold is found in the point cloud data, and all point cloud data meeting the condition form a collinear point cloud data set.

Specifically, a method for finding neighborhood points of an absolute position $L'_i$ of each piece of turnout point cloud data in the point cloud data may be, but not limited to, a K-nearest neighbor search method.

A three-dimensional coordinate set $\{L'_{i1}, L'_{i2}, \ldots, L'_{i3}\}$ of K neighborhood points is found through the method K, where K is a positive integer. A relative coordinate $(L'_{iK} - L'_i)$ of a neighborhood point and a Euclidean distance $\|L'_{iK} - L'_i\|$ of the neighborhood point are calculated through the three-dimensional coordinate set of neighborhood points.

The three-dimensional coordinate set of the neighborhood points, the relative coordinates of the neighborhood points, and the Euclidean distances of the neighborhood points represent point cloud features of the absolute positions $L'_i$ of the turnout point cloud data. Through point cloud features of each piece of point cloud data, a normal vector of each piece of point cloud data may be further obtained.

For example, three non-collinear point cloud points are selected from K neighborhood points of a point cloud point $L'_i$. Two vectors a and b having a common point are obtained through relative coordinates between the three-point cloud points, and it is calculated that a vector c satisfies a · c = 0 and b · c = 0. In this case, the vector c is a normal vector feature of the point cloud point $L'_i$.

S222: The point cloud data is projected onto a horizontal plane to obtain multiple data points on the horizontal plane.

The found collinear point cloud data set is projected onto the horizontal plane, i.e., z is set to 0, to obtain a data point set on a two-dimensional plane. Point cloud data is projected onto the horizontal plane, so that geometric features of opening direction states of different turnouts can be extracted.

For example, a point cloud point $L'_i(x_i, y_i, z_i)$ on the same plane is projected onto a plane $z_i = 0$, to obtain

coordinates $L_i''(x_i, y_i)$ of a two-dimensional plane point.

S223: Data points formed by each piece of point cloud data in the collinear point cloud set on the horizontal plane are connected to obtain the two-dimensional data.

Data points in the data point set on the two-dimensional plane are connected to obtain two-dimensional data, and a geometric feature of the turnout may be determined according to the two-dimensional data.

Next, a collinear point is found in points on the same plane. If a point cloud point belongs to different straight lines, the point is an intersection between the different straight lines. An angle of intersection is formed at the point, and the angle of intersection represents the geometric feature of the turnout.

It can be learned from the foregoing process that, in the technical solutions provided in the embodiments of the present disclosure, two-dimensional data points may be obtained by obtaining a collinear point cloud data set and projecting point cloud data to a horizontal plane, and a geometric feature of a turnout may be obtained by connecting two-dimensional data points that are not collinear. In this solution, data points on a two-dimensional plane may be obtained by setting z to 0, to obtain a geometric feature of a turnout. The solution is simple and easily available and has strong operability.

FIG. 9 is a flowchart of a specific implementation of S110 in an exemplary embodiment. Referring to FIG. 9, the process includes the following steps.

S111: Point cloud data acquired by the sensor of the first train is obtained.

S112: At least one of the following preprocessing is performed on the point cloud data: eliminating outlier data in the point cloud data, and downsampling the point cloud data.

In a case of ensuring point cloud features, outlier points are removed by using, but not limited to, statistical filtering or radius filtering. The downsampling may be performed by using, but not limited to, voxel grid filtering or sampling consistency filtering, to reduce a data volume and improve the real-time running efficiency of the system.

S113: It is determined whether point cloud data meeting a turnout feature exists in the preprocessed point cloud data.

S114: In a case that point cloud data meeting the turnout feature exists, the point cloud data meeting the turnout feature is extracted and segmented from the preprocessed point cloud data to obtain the measured point cloud data.

After noise reduction and downsampling are performed on all point cloud data acquired on a whole running line of a train multiple times, turnout point cloud data having a turnout feature, i.e., measured point cloud data at an acquisition moment, is segmented from all the point cloud data.

It can be learned from the foregoing process that, in the technical solutions provided in the embodiments of the present disclosure, obtained point cloud data of a whole running line of a train operation is preprocessed to obtain data that meets requirements, and then turnout point cloud data is segmented from the preprocessed data. In this way, geometric features of points are retained, and a data volume is reduced, thereby improving computational efficiency.

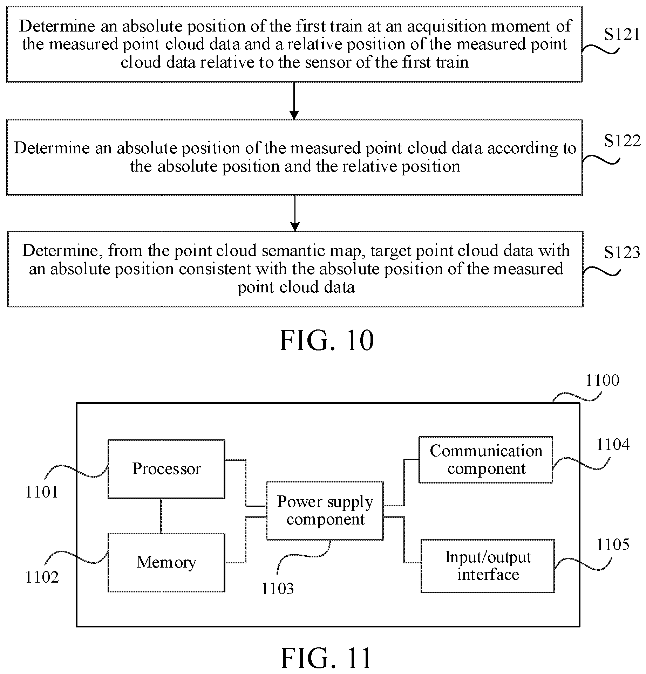

FIG. 10 is a flowchart of a specific implementation of S120 in an exemplary embodiment. The point cloud semantic map further includes an absolute position of point cloud data. Referring to FIG. 10, the process includes:

S121: An absolute position of the first train at an acquisition moment of the measured point cloud data and a relative position of the measured point cloud data relative to the sensor of the first train are determined.

A method for determining the absolute position of the first train at the acquisition moment of the measured point cloud data is consistent with a method for determining the absolute position of the second train at the acquisition moment of the turnout point cloud data, and a method for determining the relative position of the measured point cloud data relative to the sensor of the first train is consistent with a method for determining the relative position of the turnout point cloud data relative to the sensor of the second train.

Specifically, the relative position $L_{i1}$ of the measured point cloud data relative to the sensor of the first train is acquired by using lidar in the sensor of the first train, and is denoted as:

$$L_{i1}(x_{i1}, y_{i1}, z_{i1}),$$

where $i1 = 1, 2, ..., N$, and $i1$ represents a number of points included in a point cloud in a current frame.

The absolute position $W_1$ of the first train at the acquisition moment of the measured point cloud data is acquired by a GNSS in the sensor of the first train, and is denoted as:

$$W_1(x_1, y_1, z_1).$$

The absolute position of the first train at the acquisition moment of the measured point cloud data may include, but is not limited to, absolute position information in an earth-centered, earth-fixed coordinate system.

S122: An absolute position of the measured point cloud data is determined according to the absolute position and the relative position.

In addition to determining the absolute position and the relative position according to step S121, the method further includes: attitude information $P_1$ of the first train at the acquisition moment of the measured point cloud data is acquired by a IMU in the sensor of the first train, and is denoted as:

$$P_1(roll_1, pitch_1, yaw_1),$$

where $roll_1$ represents a roll angle of rotation around a Y axis, $pitch_1$ represents a pitch angle of rotation around an X axis, and $yaw_1$ represents a yaw angle of rotation around a Z axis.

A calculation formula of determining the absolute position of the measured point cloud data according to the relative position of the measured point cloud data relative to the sensor of the first train, the absolute position of the first train at the acquisition moment of the measured point cloud data, and the attitude information of the first train at the acquisition moment of the measured point cloud data is:

$$L'_{i1} = \psi(L_{i1}, W_1, P_1),$$

where $L'_{i1}$ represents the absolute position of the measured point cloud data, $\psi$ represents coordinate transformation, $W_{i1}$ represents the relative position of the measured point cloud data relative to the sensor of the first train, $W_1$ represents the absolute position of the first train at the acquisition moment of the measured point cloud data, and $P_1$ represents the attitude information of the first train at the acquisition moment of the measured point cloud data.

S123: Target point cloud data with an absolute position consistent with the absolute position of the measured point cloud data is determined from the point cloud semantic map.

Various opening direction states of a same turnout have different point cloud data (i.e., the point cloud data of the various states of the same turnout described above). Therefore, during specific implementation, multiple pieces of point cloud data may be determined from the point cloud semantic map based on the absolute position of the measured point cloud data. The multiple pieces of point cloud data correspond to the various opening direction states of the same turnout. In this case, the target point cloud data may be further determined from the multiple pieces of point cloud data based on the geometric feature. For a specific manner of obtaining a geometric feature of the measured point cloud data, for details, refer the steps of the method shown in FIG. 8. Details are not described herein again.

It can be learned from the foregoing process that, an absolute position of a train and a relative position of measured point cloud data are determined, an absolute position of the measured point cloud data is obtained through coordinate transformation, consistent point cloud data is obtained through matching according to the absolute position and an absolute position of point cloud data in a point cloud semantic map, and target point cloud data can be obtained by matching a geometric feature. The solution is simple and easily available and has strong operability.

In a possible implementation of the embodiments of the present disclosure, before step S120, it may be further determined whether a fault occurs in a ground subsystem. In a case that it is determined that no fault occurs in the ground subsystem, status information of the ground can still be obtained by using the ground subsystem. When a fault occurs in the ground subsystem, step S120 is performed.

FIG. 11 is a block diagram of a controller according to an exemplary embodiment. For example, a controller 1100 may be an object controller. As shown in FIG. 11, the controller 1100 includes one or more processors 1101 and a memory 1102 configured to store a computer program executable by the processor 1101. The computer program stored in the memory 1102 may include one or more modules each corresponding to a group of instructions. In addition, the processor 1101 may be configured to execute the computer program to perform the foregoing turnout state detection method.

In addition, the controller 1100 may further include a power supply component 1103 and a communication component 1104. The power supply component 1103 may be configured to perform power management of the controller 1100. The communication component 1104 may be configured to implement communication, for example, wired or wireless communication, of the controller 1100, to implement communication with a vehicle and an ATS through the communication. In addition, the controller 1100 may further include an input/output interface 1105. The controller 1100 may operate an operating system, for example, Windows Server™, Mac OS X™, Unix™, and Linux™, stored in the memory 1102.

In another exemplary embodiment, a computer-readable storage medium including program instructions is further provided. The program instructions are executed by a processor to implement the steps of the foregoing turnout state detection method. For example, the computer-readable storage medium may be the foregoing memory 1102 including computer instructions. The foregoing computer instructions may be executed by the processor 1101 of the controller 1100 to complete the foregoing turnout state detection method.

In another exemplary embodiment, a computer program product is further provided. The computer program product includes a computer program executable by a programmable device. The computer program has a code part configured to perform, when being executed by the programmable device, the foregoing turnout state detection method.

The exemplary embodiments of the present disclosure are described in detail above with reference to the accompanying drawings, but the present disclosure is not limited to the specific details in the above embodiments. Various simple variations may be made to the technical solutions of the present disclosure within the scope of the technical idea of the present disclosure, and such simple variations shall all fall within the protection scope of the present disclosure.

It should be further noted that the specific technical features described in the above specific embodiments may be combined in any suitable manner without contradiction. To avoid unnecessary repetition, various possible combinations are not further described in the present disclosure.

In addition, the various embodiments of the present disclosure may be combined without departing from the idea of the present disclosure, and such combinations shall also fall within the scope of the present disclosure.

**Claims**

1. A turnout state detection method, comprising:

   obtaining measured point cloud data in a driving direction of a first train based on a sensor of the first train (S110);
   determining target point cloud data matched with the measured point cloud data from a pre-established point cloud semantic map, the point cloud semantic map comprising point cloud data of various states of turnouts on a whole running line of the first train and turnout state information corresponding to the point cloud data (S120); and
   determining a turnout state in the driving direction of the first train according to the turnout state information corresponding to the target point cloud data in the point cloud semantic map (S130).

2. The method according to claim 1, wherein establishment of the point cloud semantic map comprises:

   obtaining the point cloud data of the various states of the turnouts on the whole running line (S210);
   converting the point cloud data into two-dimensional data, and determining geometric features of the turnouts according to the two-dimensional data (S220); and
   determining opening direction states and turnout types of the turnouts according to the geometric features, and establishing correspondences among the geometric features, the opening direction states, and the turnout types to obtain the point cloud semantic map (S230).

3. The method according to claim 1, wherein before obtaining measured point cloud data in the driving direction of the first train based on the sensor of the first train, the method further comprises:

   obtaining the point cloud semantic map established by a second train,
   wherein the point cloud semantic map is established by the second train by performing the following steps: obtaining the point cloud data of the various states of the turnouts on the whole running line; converting the point cloud data into two-dimensional data, and determining geometric features of the turnouts according to the two-dimensional data; and determining opening direction states and turnout types of the turnouts according to the geometric features, and establishing correspondences among the geometric features, the opening direction states, and the turnout types to obtain the point cloud semantic map.

4. The method according to claim 2 or 3, wherein obtaining the point cloud data of the various states of the turnouts on the whole running line comprises:

   obtaining point cloud data acquired by a sensor of the second train each time when the second train performs a plurality of runs on the whole running line, wherein opening direction states of the turnouts on the whole running line corresponding to each run in the plurality of runs are different, and a number of the plurality of runs is a product of numbers of opening direction states of each turnout on the whole running line (S211);
   for the point cloud data of the whole running line acquired each time, extracting and segmenting turnout point cloud data on the whole running line from the point cloud data of the whole running line (S212);
   for each piece of turnout point cloud data, determining an absolute position of the turnout point cloud data according to a relative position of the turnout point cloud data relative to the sensor of the second train and an absolute position of the second train at an acquisition moment of the turnout point cloud data (S213); and
   using turnout point cloud data with a same absolute position as point cloud data of various states of a same turnout (S214).

5. The method according to any one of claims 2 to 4, wherein converting the point cloud data into two-dimensional data comprises:

   determining a collinear point cloud set from the point cloud data, wherein the collinear point cloud set comprises point cloud data that are adjacent and have an angle between normal vectors being less than a preset threshold (S221);
   projecting the point cloud data onto a horizontal plane to obtain multiple data points on the horizontal plane (S222); and

connecting data points formed by each piece of point cloud data in the collinear point cloud set on the horizontal plane to obtain the two-dimensional data (S223).

6. The method according to any one of claims 2 to 5, wherein the geometric features comprise a number of angles of intersection formed by turnouts presented in the two-dimensional data and position relationships between the angles of intersection;

the turnout types comprise at least one of a simple turnout, a two-way turnout, a three-way turnout, and a multi-way turnout; and
the opening direction states of the turnouts comprise a normal position and a reverse position.

7. The method according to any one of claims 1 to 6, wherein obtaining measured point cloud data in the driving direction of the first train based on the sensor of the first train comprises:

obtaining point cloud data acquired by the sensor of the first train (S111);
performing at least one of the following preprocessing on the point cloud data: eliminating outlier data in the point cloud data, and downsampling the point cloud data (S112);
determining whether point cloud data meeting a turnout feature exists in the preprocessed point cloud data (S113); and
in response to point cloud data meeting the turnout feature, extracting and segmenting the point cloud data meeting the turnout feature from the preprocessed point cloud data to obtain the measured point cloud data (S114).

8. The method according to any one of claims 1 to 7, wherein the point cloud semantic map further comprises an absolute position of point cloud data, and determining target point cloud data matched with the measured point cloud data from the pre-established point cloud semantic map comprises:

determining an absolute position of the first train at an acquisition moment of the measured point cloud data and a relative position of the measured point cloud data relative to the sensor of the first train (S121);
determining an absolute position of the measured point cloud data according to the absolute position and the relative position (S122); and
determining, from the point cloud semantic map, target point cloud data with an absolute position consistent with the absolute position of the measured point cloud data (S123).

9. A non-transitory computer-readable storage medium, having a computer program stored thereon, wherein the program, when executed by a processor, implements steps of a turnout state detection method:

obtaining measured point cloud data in a driving direction of a first train based on a sensor of the first train;
determining target point cloud data matched with the measured point cloud data from a pre-established point cloud semantic map, the point cloud semantic map comprising point cloud data of various states of turnouts on a whole running line of the first train and turnout state information corresponding to the point cloud data; and
determining a turnout state in the driving direction of the first train according to the turnout state information corresponding to the target point cloud data in the point cloud semantic map.

10. A controller (1100), comprising:

a memory (1102), having a computer program stored thereon; and
a processor (1101), configured to execute the computer program in the memory to implement steps of a turnout state detection method:

obtaining measured point cloud data in a driving direction of a first train based on a sensor of the first train;
determining target point cloud data matched with the measured point cloud data from a pre-established point cloud semantic map, the point cloud semantic map comprising point cloud data of various states of turnouts on a whole running line of the first train and turnout state information corresponding to the point cloud data; and
determining a turnout state in the driving direction of the first train according to the turnout state information corresponding to the target point cloud data in the point cloud semantic map.

FIG. 1

FIG. 2

FIG. 3

FIG. 4

| Obtain measured point cloud data in a driving direction of a first train based on a sensor of the first train | S110 |

↓

| Determine target point cloud data matched with the measured point cloud data from a pre-established point cloud semantic map, the point cloud semantic map including point cloud data of various states of turnouts on a whole running line of the first train and turnout state information corresponding to the point cloud data | S120 |

↓

| Determine a turnout state in the driving direction of the first train according to the turnout state information corresponding to the target point cloud data in the point cloud semantic map | S130 |

FIG. 5

Obtain the point cloud data of the various states of the turnouts on the whole running line — S210

Convert the point cloud data into two-dimensional data, and determine geometric features of the turnouts according to the two-dimensional data — S220

Determine opening direction states and turnout types of the turnouts according to the geometric features, and establish correspondences among the point cloud data, the opening direction states, and the turnout types to obtain the point cloud semantic map — S230

FIG. 6

Obtain point cloud data acquired by a sensor of the second train each time when the second train performs multiple times of running on the whole running line, where opening direction states of the turnouts on the whole running line corresponding to each time of running in the multiple times of running are different, and a quantity of times of the multiple times of running is a product of multiplying quantities of opening direction states of each turnout on the whole running line — S211

For the point cloud data of the whole running line acquired each time, extract and segment turnout point cloud data on the whole running line from the point cloud data of the whole running line — S212

For each piece of turnout point cloud data, determine an absolute position of the turnout point cloud data according to a relative position of the turnout point cloud data relative to the sensor of the second train and an absolute position of the second train at an acquisition moment of the turnout point cloud data — S213

Use turnout point cloud data with a same absolute position as point cloud data of various states of a same turnout — S214

FIG. 7

| Determine a collinear point cloud set from the point cloud data, where the collinear point cloud set includes point cloud data that are adjacent and have an angle between normal vectors being less than a preset threshold | S221 |

| Project the point cloud data onto a horizontal plane to obtain multiple data points on the horizontal plane | S222 |

| Connect data points formed by each piece of point cloud data in the collinear point cloud set on the horizontal plane to obtain the two-dimensional data | S223 |

FIG. 8

| Obtain point cloud data acquired by the sensor of the first train | S111 |

| Perform at least one of the following preprocessing on the point cloud data: eliminating outlier data in the point cloud data, and downsampling the point cloud data | S112 |

| Determine whether point cloud data meeting a turnout feature exists in the preprocessed point cloud data | S113 |

| In a case that point cloud data meeting the turnout feature exists, extract and segment the point cloud data meeting the turnout feature from the preprocessed point cloud data to obtain the measured point cloud data | S114 |

FIG. 9

Determine an absolute position of the first train at an acquisition moment of the measured point cloud data and a relative position of the measured point cloud data relative to the sensor of the first train — S121

Determine an absolute position of the measured point cloud data according to the absolute position and the relative position — S122

Determine, from the point cloud semantic map, target point cloud data with an absolute position consistent with the absolute position of the measured point cloud data — S123

FIG. 10

1100

Processor — 1101

Memory — 1102

Power supply component — 1103

Communication component — 1104

Input/output interface — 1105

FIG. 11

## INTERNATIONAL SEARCH REPORT

| International application No. |
| --- |
| **PCT/CN2023/085277** |

**A. CLASSIFICATION OF SUBJECT MATTER**

G06T7/00(2017.01)i

According to International Patent Classification (IPC) or to both national classification and IPC

**B. FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE: 道岔, 轨道, 铁轨, 检测, 识别, 单开, 双开, 三开, 开向, 点云, 匹配, 语义, 地图, turnout, railway, detect, identify, recognition, single, double, point cloud, match, semantics, map

**C. DOCUMENTS CONSIDERED TO BE RELEVANT**

| Category* | Citation of document, with indication, where appropriate, of the relevant passages | Relevant to claim No. |
| --- | --- | --- |
| Y | CN 205997898 U (WUHAN HANNING RAIL TRANSIT TECHNOLOGY CO., LTD.) 08 March 2017 (2017-03-08) <br> description, paragraphs [0042]-[0073] | 1-3, 5-10 |
| Y | CN 113650645 A (BEIJING AIFORAIL TECHNOLOGY CO., LTD.) 16 November 2021 (2021-11-16) <br> description, paragraphs [0047]-[0111] | 1-3, 5-10 |
| A | CN 112132896 A (BEIJING AIFORAIL TECHNOLOGY CO., LTD.) 25 December 2020 (2020-12-25) <br> description, paragraphs [0031]-[0117] | 1-10 |
| A | CN 113753094 A (BEIJING JIEMAI POLYTRON TECHNOLOGIES INC.) 07 December 2021 (2021-12-07) <br> description, paragraphs [0034]-[0061] | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 April 2023** | **28 April 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| PCT/CN2023/085277 |

| Patent document cited in search report | | | Publication date (day/month/year) | Patent family member(s) | | | Publication date (day/month/year) |
|---|---|---|---|---|---|---|---|
| CN | 205997898 | U | 08 March 2017 | None | | | |
| CN | 113650645 | A | 16 November 2021 | None | | | |
| CN | 112132896 | A | 25 December 2020 | None | | | |
| CN | 113753094 | A | 07 December 2021 | CN | 113753094 | B | 15 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211204306X